# EUROPÄISCHE PATENTANMELDUNG

(11) **EP 1 975 487 A2**
(43) Veröffentlichungstag der Anmeldung: **01.10.2008**
(21) Anmeldenummer: 08003312.9
(22) Anmeldetag: 23.02.2008
(51) Int. Cl.: F16K 31/06, F16K 37/00

(54) **Druckrohr für ein Wegemesssystem**

(30) Priorität: 27.03.2007 DE 102007014559
(71) Anmelder: Robert Bosch GmbH, 70184 Stuttgart (DE)
(72) Erfinder: Thierbach, Peter, 71634 Ludwigsburg (DE); Steprath, Werner, 41542 Dormagen (DE)

(57) **Zusammenfassung**

Es wird ein Wegemesssystem, insbesondere für ein hydraulisches Ventil, mit einem Druckrohr (1) zur Aufnahme eines Magnetankers vorgesehen, wobei das Druckrohr (1) durch Tiefziehen hergestellt ist. Dadurch kann ein kostengünstiger Herstellungsprozess für das Druckrohr angewendet werden. Durch ein Haltelement (4) und optional über einen Befestigungsflansch (26) lässt sich das Druckrohr (1) stabil an einem Ventilgehäuse anbringen.

## Beschreibung

Die vorliegende Erfindung betrifft ein Druckrohr für ein Wegemesssystem, insbesondere für ein hydraulisches Ventil.

Aus dem Dokument DE 197 07 587 B4 ist eine elektromagnetische Stelleinrichtung mit einem Polrohr bekannt, in dem sich ein über eine Magnetspule betätigbarer Anker befindet und das ein Druckrohr aufweist, in das ein Ferritkern eingebracht ist. Über am Außenumfang des Druckrohrs vorgesehene Messpulen ist die Relativposition des Ferritkerns zum Druckrohr abgreifbar. Das Druckrohr weist einen verdickten Flansch auf, der an einer Befestigungsstelle durch Einrollen mit einem magnetisch leitenden Rohrteil des Polrohrs verbunden ist. Derartige Druckrohre werden im Stand der Technik häufig als Drehteil aus dem Vollen hergestellt.

Alternativ zur Herstellung aus dem Vollen kann das Drehteil als Rohr ausgebildet werden und mittels Löt- oder Schweißtechnik abgedichtet werden Beispielsweise ist im Dokument US 6 605 940 B1 ein einen Magnetanker aufnehmendes Rohr vorgesehen, dessen eines axiales Ende durch einen Pfropfen verschlossen ist.

Die Herstellung der Druckrohre nach dem Stand der Technik ist aufwändig und teuer.

Die Aufgabe der vorliegenden Erfindung besteht darin, ein Druckrohr vorzusehen, das in einem kostengünstigen Prozess herstellbar und das für hohe Drücke geeignet ist.

Diese Aufgabe wird durch ein Druckrohr gemäß Anspruch 1 gelöst.

Erfindungsgemäß wird ein Wegemesssystem, insbesondere für ein hydraulisches Ventil, mit einem Druckrohr zur Aufnahme eines Magnetankers vorgesehen, wobei das Druckrohr durch Tiefziehen hergestellt ist. Dadurch kann ein kostengünstiger Herstellungsprozess für das Druckrohr angewendet werden.

Das Druckrohr hat vorzugsweise einen Rohrabschnitt und einen sich an den Rohrabschnitt anschließenden Flanschabschnitt. Über den Flanschabschnitt kann die Befestigung am Ventilgehäuse vorgenommen werden, so dass ein stabiles und druckdichtes Anbringen ermöglich ist.

In einer Ausführungsform ist der Rohrabschnitt zumindest über einen Teilabschnitt zum Flanschabschnitt hin konisch erweitert ausgebildet, so dass ein Entfernen aus dem Umformwerkzeug erleichtert ist.

Das Wegemesssystem weist ferner ein Halteelement auf, in dem der Flanschabschnitt des Druckrohrs gehalten ist. Auf diese Weise kann auf Ausnehmungen im Flanschabschnitt des Druckrohrs verzichtet werden und dennoch eine stabile Montage des Druckrohrs am Ventilgehäuse umgesetzt werden.

Der Rohrabschnitt wird in einer Ausnehmung des Haltelements mittels Presspassung gehalten. Dadurch wird eine zentrische und rechtwinklige Montage des Druckrohrs über das Halteelement sichergestellt. Die konische Form des Druckrohrs erleichtert das Einpressen.

Der Flanschabschnitt des Druckrohrs kann in das Halteelement eingepresst sein, so dass zwischen Halteelement und Druckrohr keine zusätzliche Befestigungseinrichtung notwendig ist.

Ferner wird bevorzugt, wenn der Flanschabschnitt durch einen beim Einpressen in das Halteelement umgedrückten Rand begrenzt ist. Auf diese Weise erfolgt ein Befestigen des Flanschabschnitts am Halteelement und kann bei gleichzeitiger Befestigung des Rohrabschnitts des Druckrohrs am Halteelement ein zentrisches Befestigen des Druckrohrs umgesetzt werden. Darüber hinaus ist die Festigkeit der Verbindung erhöht.

In einer weiteren Ausführungsform ist zwischen Flanschabschnitt und Halteelement ein Dichtring vorgesehen. Dadurch wird eine Leckage zwischen Halteelement und Druckrohr verhindert. Der Dichtring ist bevorzugt ein O-Ring, so dass die Abdichtung mit niedrigen Kosten vorgenommen werden kann.

In einer weiteren Variante des Wegemesssystem ist das Halteelement mit einem Gewinde zum Anbringen am hydraulischen Ventil versehen. Dadurch entfallen weitere Befestigungselement am Haltelement und kann ein platzsparendes Wegmesssystem umgesetzt werden.

In einer weiteren Ausführung ist das Halteelement mit einer Ausnehmung für Befestigungsmittel zum Anbringen am hydraulischen Ventil versehen. Dadurch kann das Druckrohr über das Haltelement an einem Ventilgehäuse befestigt werden.

Es wird ferner bevorzugt, wenn das Druckrohr zum Anbringen am hydraulischen Ventil einen das Druckrohr radial umgebenden Befestigungsflansch aufweist. Dadurch kann das Haltelement zur zentrischen und rechtwinkligen Montage des Druckrohrs verwendet werden und kann die Befestigung über den für diese Funktion speziell ausgebildeten Befestigungsflansch erfolgen.

Der Befestigungsflansch ist dabei bevorzugt auf das Halteelement mittels Presspassung aufgebracht, so dass eine Lagefixierung zwischen Druckrohr und Befestigungsflansch vorliegt.

Es ist vorteilhaft, wenn das Druckrohr aus nicht magnetischem Stahl hergestellt ist, da auf diese Weise ein mechanisch stabiles Wegemesssystem umsetzbar und der Einfluss des Druckrohrs auf das Messsystem gering ist.

Es wird ferner ein Druckrohr für ein Wegemesssystem vorgesehen, wobei das Druckrohr durch Tiefziehen hergestellt ist. Ein derartiges Druckrohr kann kostengünstig hergestellt werden.

Erfindungsgemäße Weiterbildungen sind Gegenstand der Unteransprüche.

Nachfolgend wird die vorliegende Erfindung an Hand schematischer Zeichnungen beschrieben. Es zeigen:
Fig. 1 eine perspektivische Schnittansicht eines Druckrohrs entsprechend dem ersten Ausführungsbeispiel, an dem ein Halteelement, ein Befestigungsflansch und ein Spulenträger vorgesehen sind,
Fig. 2 eine Schnittansicht des Druckrohrs nach Fig. 1,
Fig. 3 ein Druckrohr entsprechend dem zweiten Ausführungsbeispiel in der Perspektivansicht und in der Schnittansicht und
Fig. 4 ein an einem Ventilgehäuse befestigtes Druckrohr entsprechend dem zweiten Ausführungsbeispiel.

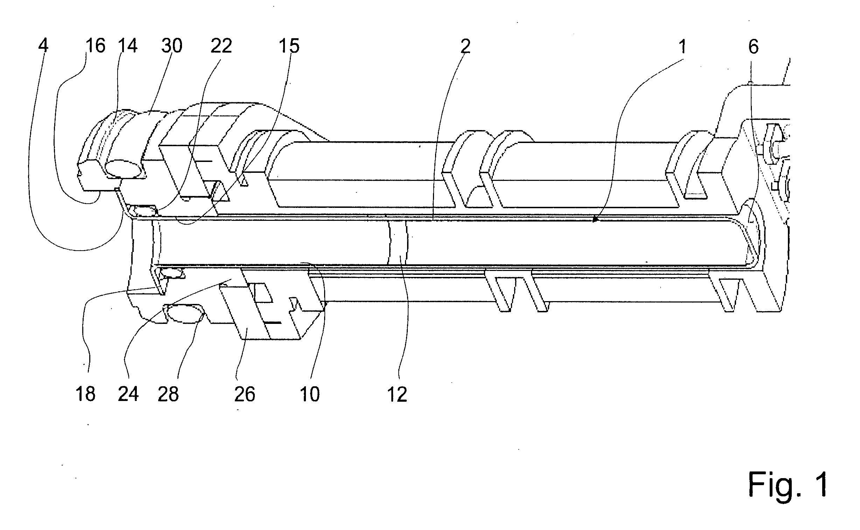

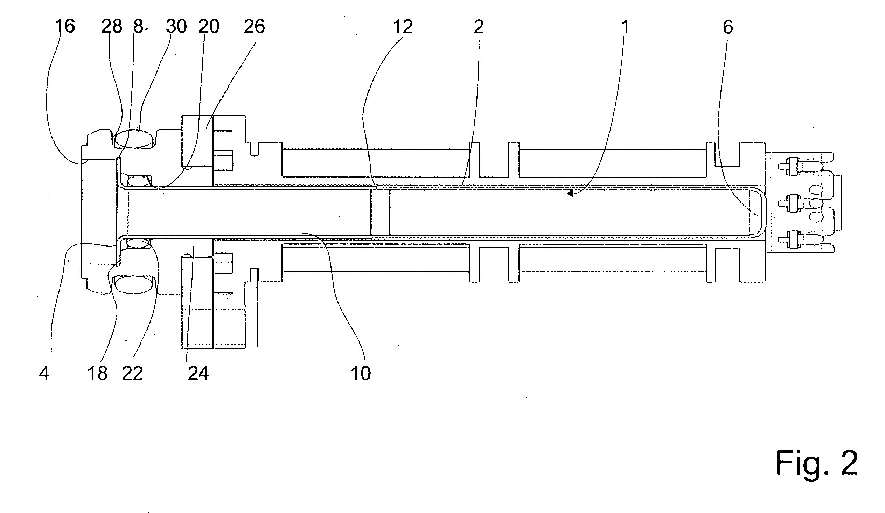

In den Schnittansichten der Fig. 1 und 2 ist ein Druckrohr 1 dargestellt, das an einem Ventilgehäuse, beispielsweise eines Proportionalventils, oder an einem Betätigungssystem von diesem anbringbar ist und das Teil eines Wegmesssystems bildet, über das eine Relativposition eines im Druckrohr angeordneten Magnetankers gegenüber dem Druckrohr über ein am Druckrohr angeordnete Messspulensystem und eine entsprechende Auswerteelektronik erfassbar ist. Das Druckrohr ist aus nicht magnetischem, beispielsweise austenitischem Stahl hergestellt.

Das Druckrohr 1 weist einen Rohrabschnitt 2 auf, an dessen einen axialen Endabschnitt sich ein Flanschabschnitt 4 anschließt und dessen anderer axialer Endabschnitt durch einen einstückig mit dem Rohrabschnitt 2 ausgebildeten Stirnabschnitt 6 abschlossen ist. Der Stirnabschnitt 6 ist mit dem Rohrabschnitt 2 im Wesentlichen ohne Kantenbildung ausgebildet. Der Flanschabschnitt hat eine in Fig. 2 gezeigte Außenumfangskante 8, die konzentrisch zur Mittelachse des Rohrabschnitts 2 verläuft.

Der Rohrabschnitt 2 hat ausgehend vom Stirnabschnitt 6 bis zu einem Übergangsbereich 12, der mehr als die halbe Längsabmessung des Druckrohrs 1 vom Stirnabschnitt 6 entfernt liegt, einen konstanten Durchmesser und weist vom Übergangsbereich 12 bis zum Flanschabschnitt 4 eine konische Erweiterung 10 auf. Der Übergang zwischen der konischen Erweiterung 10 und dem Flanschabschnitt 4 erfolgt im Wesentlichen ohne Kantenbildung.

Aufgrund der vorstehenden Ausgestaltung des Druckrohrs 1 kann dieses vorteilhaft im Tiefziehverfahren hergestellt werden. Durch den vorhandenen Flansch kann der Niederhalter des Umformwerkzeugs als Abstreifer verwendet werden und kann somit eine hohe Stückzahl an hergestellten Druckrohren realisiert werden.

Der Flanschabschnitt 4 des Druckrohrs befindet sich in einem Befestigungsstutzen 14, der eine durch den Rohrabschnitt 2 durchsetzte Durchgangsausnehmung 15 aufweist. Die Durchgangsausnehmung 15 hat eine Ringausnehmung 16, deren Durchmesser geringfügig kleiner als der Außendurchmesser der Außenumfangskante 8 des Flanschabschnitts 4 gestaltet ist und die durch eine in Fig. 2 dargestellte Ringfläche 18 begrenzt ist. Dadurch kann der Flanschabschnitt 4 des Druckrohrs 1 in die Ringausnehmung 16 eingepresst werden, wobei die Außenumfangskante 8 des Flanschabschnitts 4 umgedrückt wird. Beim Aufsetzen auf die Ringfläche 18 verhakt sich die Außenumfangskante 8 des Flanschabschnitts 4 mit der Ringausnehmung 16, so dass eine Lagefixierung des Druckrohrs 4 am Befestigungsstutzen 14 vorliegt. Der Befestigungsstutzen 14 kann einen mechanischen Anschlag des Ventilschiebers darstellen.

An die Ringfläche 18 des Befestigungsstutzens 14 schließt sich zum Mittelachse des Druckrohrs 1 hin ein zurückgestufter Abschnitt 20 zur Aufnahme eine O-Rings 22 an. Der O-Ring 22 dichtet das in den Befestigungsstutzen 14 eingebrachte Druckrohr 1 gegenüber dem Befestigungsstutzen 14 ab.

An dem zur Ringausnehmung 16 entgegengesetzten Endabschnitt des Befestigungsstutzens 14 ist ein die Durchgangsausnehmung 15 umschließender Ringabschnitt 24 ausgebildet, auf den ein Befestigungsflansch 26 pressgepasst ist.

Die konische Erweiterung 10 des Druckrohrs 1 ist in die Durchgangsausnehmung 15 zwischen dem zurückgestuften Abschnitt 20 und dem Ringabschnitt 24 ebenfalls pressgepasst. Somit wird das Druckrohr 1 durch den Befestigungsstutzen 14 abgedichtet und mechanisch stabil gehalten. Ferner wird durch die geometrische Anpassung des Druckrohrdurchmessers im Bereich der konischen Erweiterung 10 und der Durchgangsausnehmung 15 eine zentrische und rechtwinklige Montage ermöglicht.

Am Außenumfang des Befestigungsstutzens 14 ist eine Ringausnehmung 28 zur Aufnahme eines O-Rings 30 ausgebildet. Der Befestigungsstutzen 14 wird über den Befestigungsflansch 26 abgedichtet durch den O-Ring 30 am in den Figuren nicht dargestellten Ventilgehäuse befestigt.

Alternativ zum vorstehend beschriebenen ersten Ausführungsbeispiel kann auf den Befestigungsflansch 26 verzichtet werden, wenn der Befestigungsstutzen 14 mit einem Gewinde versehen ist; das in das Ventilgehäuse einschraubbar ist.

Durch das erste Ausführungsbeispiel und seine Abwandlung kann ein kostengünstiger Fertigungsprozess für das Druckrohr auch für Drücke im Bereich einiger 100 bar angewendet werden, wobei die Abdichtung mit preiswerten O-Ring-Systemen vorgenommen wird.

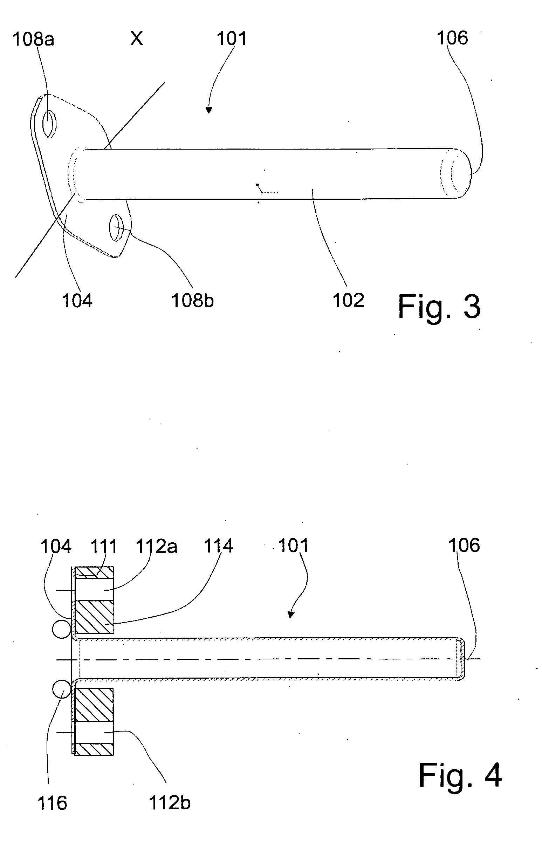

Fig. 3 zeigt ein Druckrohr 101 entsprechend dem zweiten Ausführungsbeispiel und in Fig. 4 ist das Druckrohr mit Halteelement und Dichtring dargestellt.

Das Druckrohr 101 des zweiten Ausführungsbeispiels hat ebenso wie das Druckrohr 1 des ersten Ausführungsbeispiels einen Stirnabschnitt 106 und einen Rohrabschnitt 102. Der Rohrabschnitt 102 des zweiten Ausführungsbeispiels hat über die gesamte Länge in Axialrichtung einen konstanten Durchmesser und weist somit keine konische Erweiterung auf. Der Flanschabschnitt 103 ist bezüglich einer durch die Mittelachse des Rohrabschnitts 102 verlaufenden Achse X symmetrisch ausgebildet und weist zwei Befestigungsausnehmungen 108a, 108b auf.

Alternativ dazu kann im Rohrabschnitt 102 eine konische Erweiterung ausgebildet sein, die der aus dem ersten Ausführungsbeispiel entspricht. Diese konische Erweiterung dient dann nur zur Erleichterung des Herstellungsprozesses im Tiefziehverfahren.

Wie es in Fig. 4 gezeigt ist, ist auf die vom Ventilgehäuse abgewandte Fläche des Flanschabschnitts 104 ein im Wesentlichen ringförmig ausgebildetes Halteelement 114 aufbringbar, in dem den Befestigungsausnehmungen 108a, b im Flanschabschnitt 104 zugeordnete und mit diesen ausgerichtete Ausnehmungen 112a, 112b vorgesehen sind. Am zum Haltelement 114 entgegengesetzten Abschnitt des Flanschabschnitts 104 ist ein O-Ring 116 vorsehbar, über den das Druckrohr 101 mit Abdichtung gegenüber dem Ventilgehäuse mittels des Halteelements 114 vorsehbar ist.

Durch ein Druckrohr 101 und ein Haltelement 114 entsprechend dem zweiten Ausführungsbeispiel können der Herstellungs- und Montageaufwand für das Wegemesssystem weiter verringert werden.

Anstelle des Tiefziehens sind auch andere Umformverfahren, wie z.B. Außenformdrücken, zur Fertigung des Druckrohrs anwendbar.

Es wird somit ein Wegemesssystem, insbesondere für ein hydraulisches Ventil, mit einem Druckrohr zur Aufnahme eines Magnetankers vorgesehen, wobei das Druckrohr durch Tiefziehen hergestellt ist. Dadurch kann ein kostengünstiger Herstellungsprozess für das Druckrohr angewendet werden. Durch ein Haltelement und optional über einen Befestigungsflansch lässt sich das Druckrohr stabil an einem Ventilgehäuse anbringen.

## Patentansprüche

1. Wegemesssystem, insbesondere für ein hydraulisches Ventil, mit einem Druckrohr (1) zur Aufnahme eines Magnetankers, wobei das Druckrohr (1) durch Tiefziehen hergestellt ist.

2. Wegemesssystem nach Anspruch 1, wobei das Druckrohr (1) einen Rohrabschnitt (2) und einen sich an den Rohrabschnitt anschließenden Flanschabschnitt (4) aufweist.

3. Wegemesssystem nach Anspruch 2, wobei der Rohrabschnitt (2) zumindest über einen Teilabschnitt (10) zum Flanschabschnitt hin konisch erweitert ausgebildet ist.

4. Wegemesssystem nach Anspruch 2 oder 3, das ferner ein Halteelement (14) aufweist, in dem der Flanschabschnitt (4) des Druckrohrs (1) gehalten ist.

5. Wegemesssystem nach Anspruch 4, wobei der Rohrabschnitt (2) in einer Ausnehmung (15) des Haltelements (14) mittels Presspassung gehalten wird.

6. Wegemesssystem nach Anspruch 4 oder 5, wobei der Flanschabschnitt (4) des Druckrohrs in das Halteelement (14) eingepresst ist.

7. Wegemesssystem nach Anspruch 6, wobei der Flanschabschnitt (4) durch einen beim Einpressen in das Halteelement (14) umgedrückten Rand (8) begrenzt ist.

8. Wegemesssystem nach Anspruch 6 oder 7, wobei zwischen Flanschabschnitt (4) und Halteelement (14) ein Dichtring (22) vorgesehen ist.

9. Wegemesssystem nach Anspruch 8, wobei der Dichtring (22) ein O-Ring ist.

10. Wegemesssystem nach einem der Ansprüche 4 bis 9, wobei das Halteelement mit einem Gewinde zum Anbringen am hydraulischen Ventil versehen ist

11. Wegemesssystem nach einem der Ansprüche 4 bis 9, wobei das Halteelement (14;114) mit einer Ausnehmung für Befestigungsmittel zum Anbringen am hydraulischen Ventil versehen ist.

12. Wegemesssystem nach einem der Ansprüche 4 bis 9, wobei zum Anbringen des Druckrohr (1) am hydraulischen Ventil ein das Druckrohr radial umgebender Befestigungsflansch (26) vorgesehen ist.

13. Wegemesssystem nach Anspruch 12, wobei der Befestigungsflansch (26) auf das Halteelement (14) mittels Presspassung aufgebracht ist.

14. Wegemesssystem nach einem der vorhergehenden Ansprüche, wobei das Druckrohr (1) aus nicht magnetischem Stahl hergestellt ist.

15. Druckrohr für ein Wegemesssystem, vorzugsweise nach einem der vorhergehenden Ansprüche, wobei das Druckrohr (1) durch Tiefziehen hergestellt ist.

16. Wegemesssystem nach einem der Ansprüche 2 bis 9, wobei der Flanschabschnitt (104) zumindest eine Ausnehmung (108a, 108b) für ein zugeordnetes Befestigungsmittel aufweist.
